# EUROPÄISCHE PATENTSCHRIFT

(11) **EP 2 882 313 B1**
(45) Veröffentlichungstag und Bekanntmachung des Hinweises auf die Patenterteilung: **02.11.2016**
(21) Anmeldenummer: 13753576.1
(22) Anmeldetag: 07.08.2013
(51) Int. Cl.: A46B 3/00, A61C 15/00, A61C 15/02, A46B 3/18

(54) **INTERDENTAL-REINIGER**
INTERDENTAL CLEANER
DISPOSITIF DE NETTOYAGE INTERDENTAIRE

(30) Priorität: 09.08.2012 DE 102012015664
(43) Veröffentlichungstag der Anmeldung: 17.06.2015
(73) Patentinhaber: Sunstar Suisse SA, 1163 Etoy (CH)
(72) Erfinder: BUTZ, Jürgen, 79677 Schönau (DE); PÖTSCH, Gerhard, 79108 Freiburg (DE)
(74) Vertreter: Lichti - Patentanwälte Partnerschaft mbB
(86) Internationale Anmeldenummer: PCT/EP2013/002360
(87) Internationale Veröffentlichungsnummer: WO 2014/023424

(56) Entgegenhaltungen:
- EP-A1- 1 679 017
- DE-A1- 19 642 431
- DE-A1-102005 026 268
- JP-A- 2004 209 242
- US-A- 5 775 346

## Beschreibung

Die Erfindung betrifft einen Interdental-Reiniger mit einem stabförmigen Träger, der in einem axialen Endbereich ein Reinigungsteil aufweist, das aus einem weich-elastischen Kunststoff besteht und auf der Außenseite eine Strukturierung besitzt, wobei in dem Träger zumindest abschnittsweise ein sich in Längsrichtung des Trägers erstreckendes Drahtteil angeordnet ist, das vorzugsweise vollständig in den Träger eingebettet ist.

Ein entsprechender Interdental-Reiniger ist aus der DE 10 2005 026 268 A1 bekannt. Der dort beschriebene Interdental-Reiniger besitzt einen stabförmigen Träger aus einem 1. Kunststoff-Material, der an seinem einen axialen Ende ein Griffteil und an seinem axial entgegengesetzten Ende ein Reinigungsteil in Form eines Überzugs des Trägers besitzt. Der Überzug besteht aus einem weich-elastischen Kunststoff, beispielsweise einem thermoplastischen Elastomer. Der Überzug besitzt auf seiner Außenseite eine Strukturierung in Form von Noppen oder sich radial nach außen erstreckenden Fingern. In den Träger ist ein Drahtteil eingebettet, das die Biegesteifigkeit des Interdentalreinigers erhöht.

Der Benutzer ergreift den Interdental-Reiniger am Griffteil und führt den stabförmigen Träger mit dem den Überzug tragenden Ende in einen Zahnzwischenraum ein und bewegt den Interdental-Reiniger hin und her, wodurch der Zahnzwischenraum gereinigt und eventuell anhaftende Partikel gelöst werden.

Bei der Benutzung des Interdentalreinigers treten zwischen den Überzug und dem Träger relativ hohe Schubkräfte auf. Um diese sicher aufzunehmen, sollte der Überzug mit dem Träger fest verbunden und insbesondere verschweißt sein. Dies ist jedoch nicht bei allen Materialkombinationen möglich, so dass die Gestaltungsmöglichkeiten des Interdentalreinigers dadurch beschränkt sind.

Der Erfindung liegt die Aufgabe zugrunde, einen Interdentalreiniger der genannten Art zu schaffen, bei dem eine gute Befestigung zwischen dem Träger und dem Reinigungsteil zuverlässig gewährleistet ist.

Diese Aufgabe wird erfindungsgemäß durch ein Interdental-Reiniger mit den Merkmalen des Anspruchs 1 gelöst. Dabei ist vorgesehen, dass in dem Träger Ausnehmungen ausgebildet sind, die mit dem weich-elastischen Kunststoff des Reinigungsteils gefüllt sind, wobei zumindest einige der Ausnehmungen auf entgegengesetzten Seiten des Trägers ausgebildet sind und die Ausnehmungen sich bis zum Drahtteil erstrecken.

Auf diese Weise ist zwischen dem Träger und dem Reinigungsteil ein formschlüssiger Eingriff gegeben, wodurch das Reinigungsteil zuverlässig auf dem Träger gehalten ist.

Die Ausnehmungen in dem Träger können durch Haltestifte ausgebildet werden, die bei der Herstellung des Interdentalreinigers im Spritzgusswerkzeug zusätzlich dafür sorgen, dass das Halteteil innerhalb des Formhohlraum des Spritzgusswerkzeugs korrekt positioniert und gehalten ist. Vorzugsweise verlaufen die Ausnehmungen zumindest abschnittsweise radial, wobei mehrere axial beabstandete Ausnehmungen vorgesehen sein können.

Wenn in dem Träger in einem 1. Herstellungsschritt Ausnehmungen der genannten Art ausgebildet werden und der Träger in einem 2. Herstellungsschritt anschließend mit dem weich-elastischen Kunststoff zur Bildung des Reinigungsteils umspritzt wird, können sich die Ausnehmungen des Trägers mit dem weich-elastischen Kunststoff des Reinigungsteils füllen, so dass ein guter Eingriff zwischen dem Träger und dem Reinigungsteil gegeben ist.

In Weiterbildung der Erfindung kann vorgesehen sein, dass auch in dem Reinigungsteil radial verlaufende, außenseitig zugängige Ausnehmungen ausgebildet sind. Diese Ausnehmungen sind vorzugsweise ungefüllt, so dass an der Oberfläche des Reinigungsteils an jeder Ausnehmung zusätzliche Reinigungskanten gebildet sind. Darüber hinaus können die Ausnehmungen als Reservoir für einen außenseitig aufgebrachten Wirkstoff dienen. Bei dem Wirkstoff kann es sich um einen Wirkstoff mit anti-bakterieller Wirkung, um einen Wirkstoff zur Stärkung des Zahnschmelzes, um einen Wirkstoff zur Karies- und Plaque-Reduzierung oder um einen Geschmacksstoff handeln. Gegebenenfalls kann der Wirkstoff auch eine abrasive Wirkung besitzen.

Das Drahtteil trägt wesentlich zur Biegestabilität des Interdental-Reinigers bei. Durch Wahl des Materials für das Drahtteil, das üblicherweise aus Metall oder einer Metalllegierung und insbesondere aus Stahl oder auch aus Kunststoff, beispielsweise Nylon, besteht, und auch durch Wahl der Geometrie des Drahtteils lässt sich die Biegesteifigkeit des Interdental-Reinigers vorwählen. Wenn Interdental-Reiniger mit einer veränderten Biegesteifigkeit hergestellt werden sollen, ist es lediglich notwendig, entsprechend andere Drahtteile zu verwenden. Bei der Herstellung mittels Spritzgießen muss zur Änderung der Biegesteifigkeit des Interdentalreinigers lediglich ein anderes Drahtteil in die Spritzgussform eingelegt werden, ohne dass die Spritzgussform grundsätzlich verändert werden muss.

Der Interdental-Reiniger kann sich aufgrund der Flexibilität des Drahtteils elastisch verformen und ermöglicht somit die Reinigung auch schwer zugänglicher Bereiche des Mundraums. Wenn der Benutzer das Drahtteil plastisch verformt, kann er den Interdentalreiniger in eine Form biegen, die beispielsweise eine bessere Reinigung der hinteren Backentaschen ermöglicht. Dabei ist ein Brechen des Interdental-Reinigers aufgrund der Verformbarkeit des Drahtteils vermieden.

Der in diesem Text verwendete Begriff "axial" bezieht sich auf die Längsachse des stabförmigen Trägers und somit auch auf die Längsachse des Interdentalreinigers. Der Begriff "radial" bezieht sich dementsprechend auf eine senkrecht zur axialen Längsrichtung verlaufende Richtung.

In einer möglichen Ausgestaltung der Erfindung kann der Träger aus einem eigenstabilen Kunststoff, beispielsweise Polypropylen, bestehen und das Reinigungsteil kann von einem zumindest abschnittsweisen Überzug des Trägers gebildet sein. Dabei ist insbesondere vorgesehen, dass das Drahtteil vollständig in den Träger eingebettet ist. Ein derartiger Interdental-Reiniger lässt sich beispielsweise herstellen, indem das Drahtteil in eine Spritzgussform eingelegt und mit dem den Träger bildenden Kunststoff abschnittsweise oder vollständig umspritzt wird. In einem weiteren Verfahrensschritt wird dann auf den eigenstabilen Kunststoff des Trägers das Reinigungsteil bzw. der Überzug aus dem weich-elastischen Kunststoff aufgespritzt.

Da das Drahtteil vollständig in den Träger eingebettet und von diesem überdeckt ist, ist zuverlässig ausgeschlossen, dass der Benutzer mit seinen Zähnen mit dem Drahtteil in direkten Kontakt kommt.

In einer weiteren möglichen Ausgestaltung der Erfindung ist vorgesehen, dass das Drahtteil ein einzelner gerader Draht ist, der in dem Träger eingebettet ist. Alternativ können auch zwei oder mehrere vorzugsweise parallel verlaufende Drähte vorgesehen sein.

Es hat sich als besonders vorteilhaft erwiesen, zwei parallel verlaufende Drähte vorzusehen, die sich in einfacher Weise dadurch herstellen lassen, dass ein einzelner längerer Draht zu einer Doppellage gebogen wird, so dass er eine im wesentlichen U-förmige Konfiguration besitzt.

Um die Stabilität der Drähte zu erhöhen und ihre gegenseitige Positionierung zu sichern, können die Drähte miteinander um ihre Längsachse oder eine dazu parallele Achse verdrillt sein.

In Weiterbildung der Erfindung kann vorgesehen sein, dass an den verdrillten Drähten Borstenbündel und/oder Einzelborsten gehalten sind, was insbesondere dadurch erfolgt, dass die Borstenbündel und/oder Einzelbündel zwischen den verdrillten Drähten durch Klemmung gehalten sind. Die Borstenbündel und/oder Einzelborsten sollten dabei so ausgerichtet sein, dass sie im wesentlichen radial zum Drahtteil verlaufen.

Borsten im Sinne dieser Anmeldung sind dünne, vorgefertigte Abschnitte eines aus Kunststoff bestehenden Monofilamentes oder Multifilamentes, die einen maximalen Durchmesser von 0,25mm aufweisen.

Nach der Aufbringung des Reinigungsteils bzw. des Überzugs aus dem thermoplastischen Elastomer stehen die Borstenbündel und/oder Einzelborsten aus dem Reinigungsteil hervor. Auf diese Weise dienen sie der zusätzlichen Reinigung der Zahnzwischenräume insbesondere sehr kleiner Spalte und Taschen.

In bevorzugter Ausgestaltung der Erfindung ist vorgesehen, dass die Borstenbündel und/oder Einzelborsten die Strukturierung des Reinigungsteils in radialer Richtung überragen. Die Borstenbündel und/oder Einzelborsten können die Strukturierung um ein Maß von 0,1mm bis 1,5mm und vorzugsweise von 0,1mm bis 0,8mm und besonders bevorzugt um 0,1mm bis 0,4mm überragen.

Alternativ kann jedoch auch vorgesehen sein, dass die Strukturierung des Reinigungsteils die Borsten und/oder Einzelborsten in radialer Richtung überragt. Dabei kann die Strukturierung um ein Maß von 0,1mm bis 0,8mm und vorzugsweise von 0,1mm bis 0,5mm über die Borstenbündel und/oder Einzelborsten hervorstehen.

An dem dem hinteren Griffteil des Interdental-Reinigers entgegengesetzten vorderen Ende des Interdental-Reinigers kann ein Spitzenteil aus Kunststoff ausgebildet sein. Vorzugsweise ist das Spitzenteil Teil des Trägers und besteht aus dem gleichen Material wie dieser. Dabei kann der Überzug im Abstand zum vorderen Ende des Interdental-Reinigers enden, so dass am dortigen vorderen Ende das Spitzenteil freiliegt.

In einer möglichen Ausgestaltung der Erfindung ist vorgesehen, dass die Strukturierung mehrere radial vom Reinigungsteil hervorstehende Finger aufweist, die vorzugsweise einstückig mit dem Reinigungsteil ausgebildet sind. Mit den Fingern lässt sich eine hohe Reinigungsleistung erzielen, wobei die Finger sich beim Einführen des Interdental-Reinigers in den Zahnzwischenraum verformen und verbiegen und somit wesentlich zur Reinigung der Oberfläche der Zähne und des Zahnzwischenraums beitragen.

Die Finger sind vorzugsweise einstückig mit dem Reinigungsteil bzw. dem Überzug verbunden und bestehen aus dem gleichen Material wie dieser. Sie werden bei der Herstellung des Interdental-Reinigers zusammen mit der Ausbildung des Reinigungsteils vorzugsweise im Spritzgussverfahren hergestellt.

Weitere Einzelheiten und Merkmale der Erfindung sind aus der folgenden Beschreibung von Ausführungsbeispielen unter Bezugnahme auf die Zeichnung ersichtlich. Es zeigen:
- Fig. 1: eine perspektivische Ansicht eines Interdentalreinigers gemäß einem 1. Ausführungsbeispiel,
- Fig. 2: einen Längsschnitt durch das vordere Ende des Interdentalreinigers gemäß Figur 1,
- Fig. 3: den Schnitt III-III in Figur 2,
- Fig. 4: einen Längsschnitt durch das vordere Ende des Interdental-Reinigers gemäß einem dem 2. Ausführungsbeispiel,
- Fig. 5: den Schnitt V-V in Figur 4,
- Fig. 6: eine Abwandlung des Interdentalreinigers gemäß Figur 4,
- Fig. 7: eine weitere Abwandlung des Ausführungsbeispiels gemäß Figur 4,
- Fig. 8: einen Längsschnitt durch das vordere Ende des Interdental-Reinigers gemäß einer Weiterentwicklung,
- Fig. 9: den Schnitt IX-IX in Figur 8,
- Fig. 10: den Schnitt X-X in Figur 8 und
- Fig. 11: eine Aufsicht auf das vordere Ende des Interdental-Reinigers gemäß Figur 8.

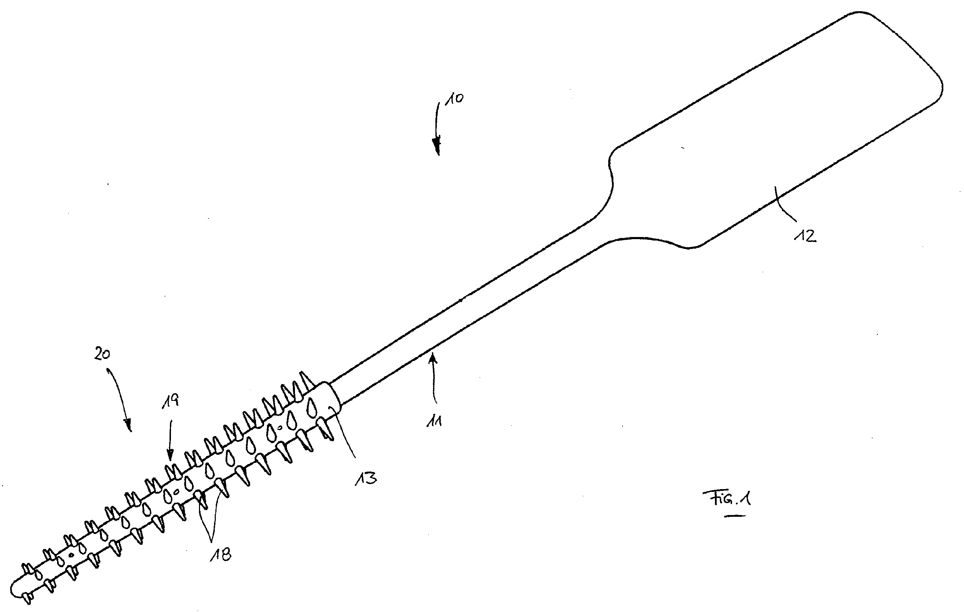

Figur 1 zeigt eine perspektivische Darstellung eines Interdental-Reinigers 10, der einen Träger 11 besitzt, an dessen hinteren, gemäß Figur 1 rechten Ende einen Griffabschnitt 12 ausgebildet ist, an dem ein Benutzer den Interdental-Reiniger 10 ergreifen kann.

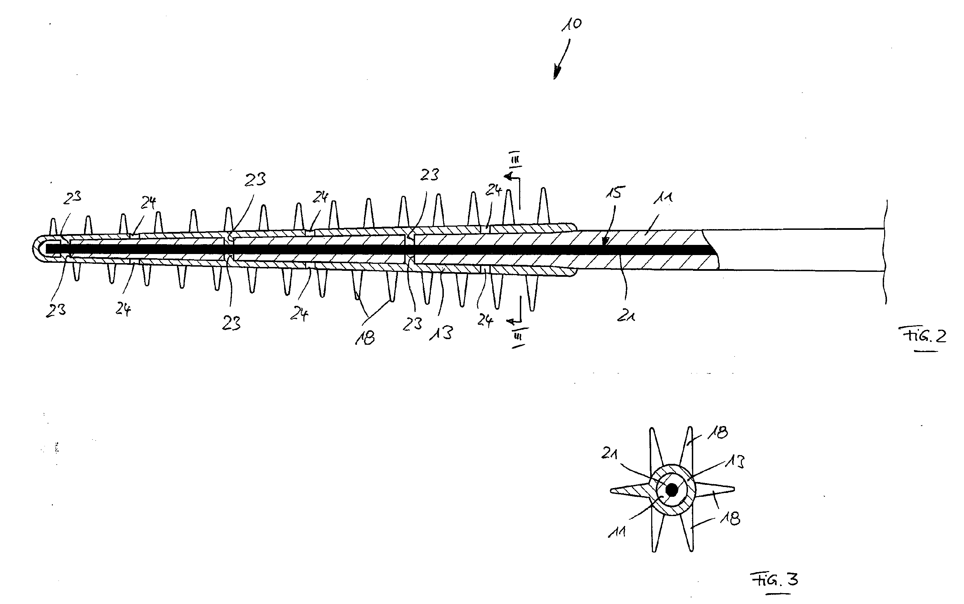

Der Träger 11 besteht aus einem formstabilen Kunststoff, beispielsweise Polypropylen, und ist einstückig mit dem Griffabschnitt 12 verbunden. An dem dem Griffabschnitt 12 axial entgegengesetzten vorderen, gemäß Figur 1 linken Ende weist der Träger 11 ein Reinigungsteil 20 auf, das auf seiner Außenseite eine Strukturierung 19 besitzt. Das Reinigungsteil 20 in Form eines hülsenartigen Überzugs 13 ist auf das vordere Ende des formstabilen Kunststoffs des Trägers 11 aufgebracht und mit diesem verbunden. Im dargestellten Ausführungsbeispiel besteht die Strukturierung 19 aus radial nach außen hervorstehenden, frei auskragenden Fingern 18, die aus dem gleichen Material wie das Reinigungsteil 20 bestehen und einstückig mit diesem ausgebildet sind. Die Finger 18 besitzen eine sich radial nach außen verjüngende Kegelform (hier beispielhaft als Kreiskegel dargestellt). Das Reinigungsteil 20 und die Finger 18 bestehen aus einem weich-elastischen Kunststoff, insbesondere einem thermoplastischen Elastomer und sind als einstückiges, monolithisches Bauteil ausgebildet. In den Träger 11 ist ein sich in Längsrichtung des Trägers 11 erstreckendes Drahtteil 15 eingebettet, das in den Figuren 2 und 3 dargestellt ist.

Der konkrete Aufbau des Interdental-Reinigers ist aus den Figuren 2 und 3 ersichtlich. Das in Längsrichtung des Trägers 11 verlaufende Drahtteil 15 besitzt die Form eines einzeln geraden Drahtes 21, der aus Metall, einer Metalllegierung oder aus Kunststoff besteht und von dem Kunststoff des Trägers 11 vollständig umgeben und somit in diesen eingebettet ist.

In dem Träger 11 sind sich radial erstreckende Ausnehmungen 23 ausgebildet, die sich bis zum Drahtteil 15 erstrecken. Beim Aufbringen bzw. Aufspritzen des weich-elastischen Kunststoffs zur Bildung des hülsenförmigen Überzugs 13 werden die Ausnehmungen 23 mit dem weich-elastischen Kunststoff gefüllt, so dass ein formschlüssiger Eingriff zwischen dem Träger 11 und dem Überzug 13 gegeben ist.

Die Ausnehmungen 23 lassen sich ausbilden, indem das Drahtteil 15 bei der Herstellung des Interdentalreinigers in dem Spritzgusswerkzeug auf Stiften gelagert und gehalten wird und in dieser Position mit dem den Träger 11 bildenden Kunststoff umspritzt wird, wobei die Stifte die Ausnehmungen 23 bilden. Der das Drahtteil 15 aufnehmende Träger 11 wird zur Bildung des hülsenartigen Überzugs 13 in ein Spritzgusswerkzeug eingesetzt und in diesem über Stifte gehalten und fixiert. Dies führt dazu, dass auch in dem hülsenartigen Überzug 13 radiale Ausnehmungen 24 gebildet werden, die gemäß Figur 2 in axialer Richtung versetzt zu den Ausnehmungen 23 in dem Träger 11 angeordnet sind.

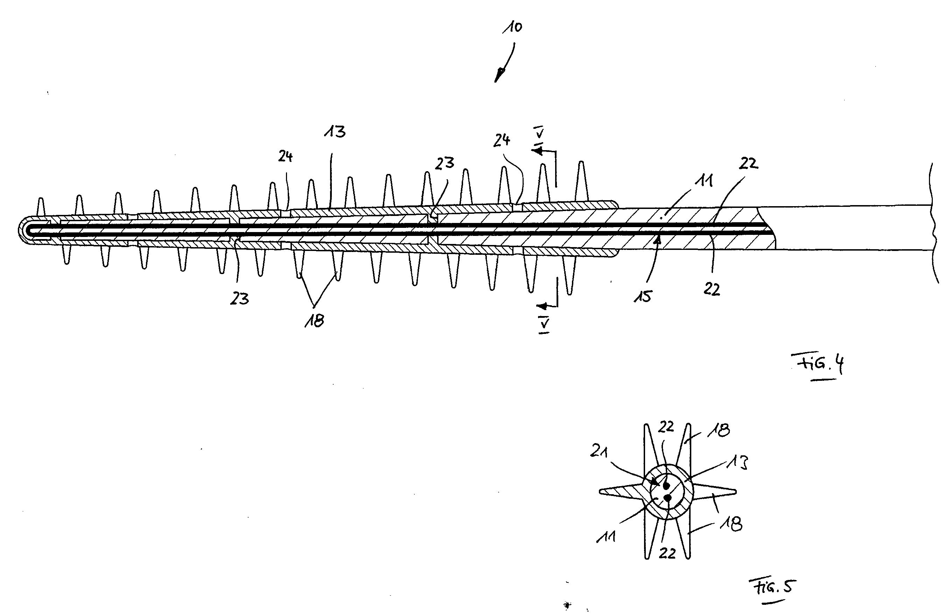

Bei den bisherigen Ausführungsbeispielen ist das Drahtteil 15 von einem einzelnen, mittigen Draht 21 gebildet. Die Figuren 4 und 5 zeigen eine Abwandlung des Interdental-reinigers 10, bei dem das Drahtteil 15 von zwei geraden, parallel zueinander verlaufenden Drähten 22 gebildet ist, die am vorderen Ende über einen umgebogenen Abschnitt miteinander verbunden sind. Das Drahtteil 15 kann aus einem einzelnen Draht hergestellt werden, der zu einer Doppellage gebogen wird. Ansonsten entspricht dieses Ausführungsbeispiel dem Ausführungsbeispiel gemäß den Figuren 1 bis 3.

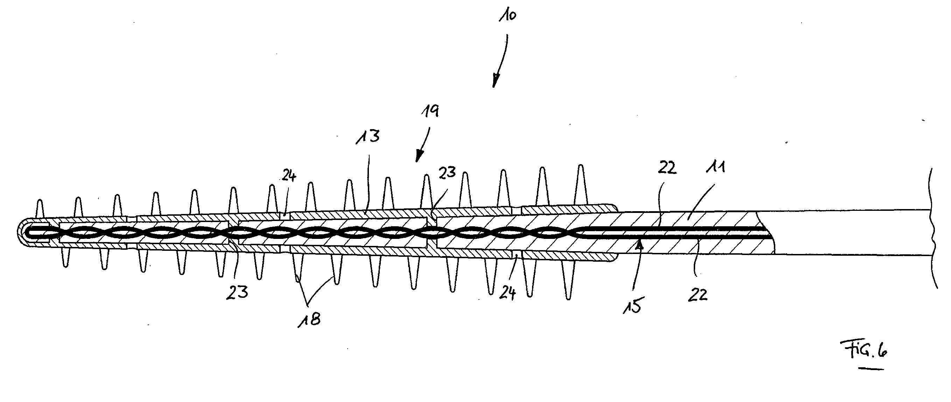

Figur 6 zeigt eine weitere Alternative des Drahtteils 15, wobei es sich von dem Ausführungsbeispiel gemäß Figur 4 dadurch unterscheidet, dass die beiden parallel zueinander verlaufenden Drähte 22 um ihre Längsachse oder eine dazu parallele Achse verdrillt sind, so dass sie die Form ineinandergreifender Wendeln besitzen. Die Verdrillung der beiden Drähte 22 verleiht dem Drahtteil 15 eine höhere Stabilität.

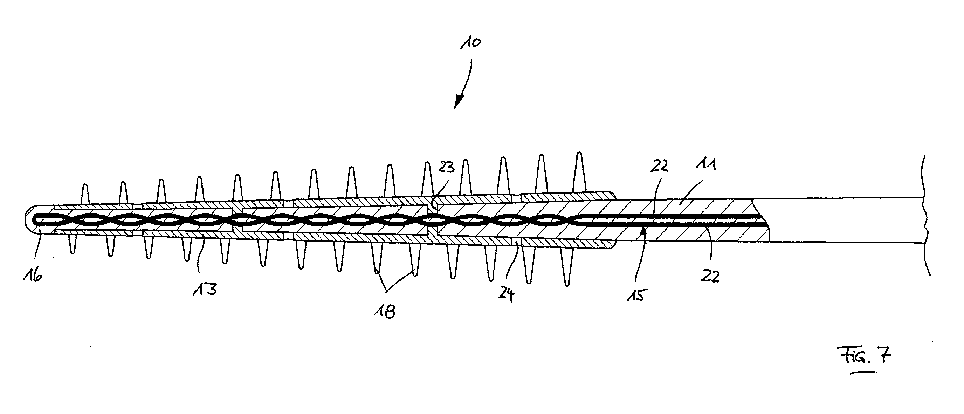

Bei den bisher dargestellten Ausführungsbeispielen erstreckt sich das Reinigungsteil 20 bzw. der Überzug 13 immer bis zum vorderen Ende des Interdental-Reinigers. Figur 7 zeigt eine Abwandlung davon. Am vorderen Ende des Interdental-Reinigers 10 ist ein Spitzenteil 16 aus Kunststoff angeordnet, das Teil des Trägers 11 ist und aus dem gleichen Material wie dieser besteht. Das vordere Ende des Drahtteils 15 ist in das Spitzenteil 16 eingebettet und das Reinigungsteil 20 bzw. der Überzug 13 erstreckt sich nur bis zum hinteren Ende des Spitzenteils 16, ohne dieses zu übergreifen. Auf der Außenseite ist ein glatter, stufenloser Übergang zwischen dem Spitzenteil 16 und dem Überzug 13 gegeben.

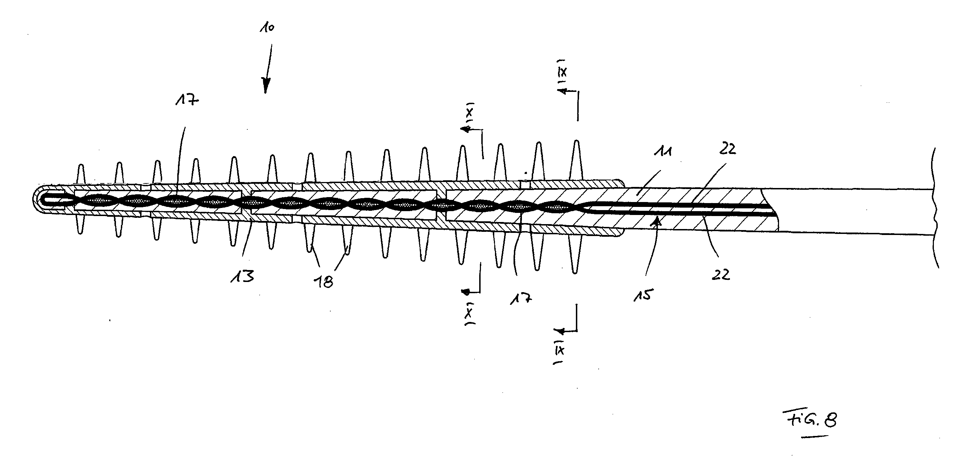

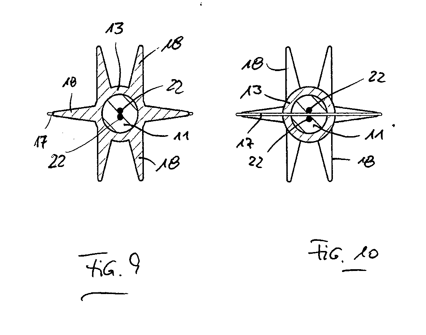

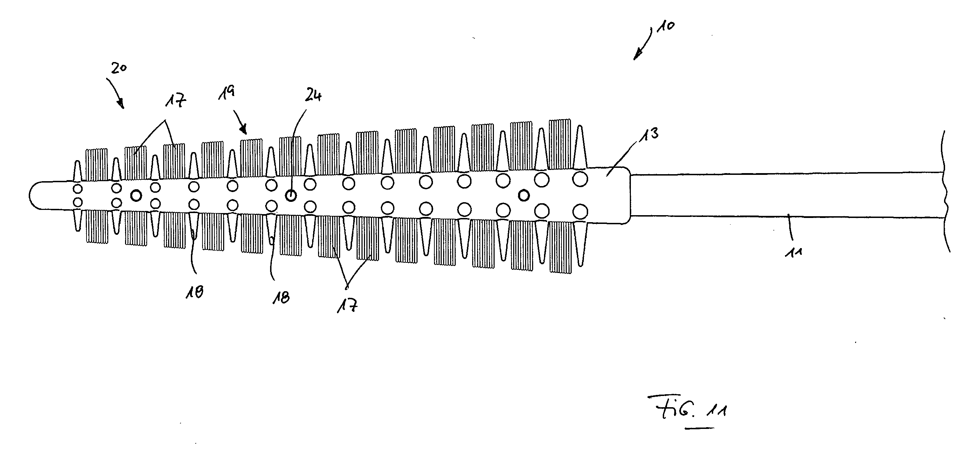

Die Figuren 8 bis 11 zeigen ein weiteres Ausführungsbeispiel, bei dem die Drähte 22 ebenfalls um ihre Längsachse oder eine dazu parallele Achse miteinander verdrillt sind, wobei zwischen den Drähten Borstenbündel 17 und/oder Einzelborsten angeordnet sind, die beim Verdrillen der Drähte 22 eingeklemmt und somit sicher positioniert werden. Die Borstenbündel 17 bzw. Einzelborsten erstrecken sich radial oder mit zumindest einer radialen Komponente zur Längsrichtung des Interdental-Reinigers und stehen auf der Außenseite aus dem Reinigungsteil 20 bzw. dem Überzug 13 hervor. Wie Figur 11 zeigt, sind die Borsten der Borstenbündel 17 bzw. die Einzelborsten so lang, dass sie in radialer Richtung die Finger 18 um ein Maß von 0,1mm bis 0,4mm überragen.

## Patentansprüche

1. Interdental-Reiniger mit einem stabförmigen Träger (11), der in einem axialen Endbereich ein Reinigungsteil (20) aufweist, das aus einem weich-elastischen Kunststoff besteht und auf der Außenseite eine Strukturierung (19) besitzt, wobei in dem Träger (11) zumindest abschnittsweise ein sich in Längsrichtung des Trägers (11) erstreckendes Drahtteil (15) angeordnet ist, das in den Träger (11) eingebettet ist, **dadurch gekennzeichnet, dass** in dem Träger (11) Ausnehmungen (23) ausgebildet sind, die mit dem weich-elastischen Kunststoff des Reinigungsteils (20) gefüllt sind, wobei zumindest einige der Ausnehmungen (23) auf entgegengesetzten Seiten des Trägers (11) ausgebildet sind und die Ausnehmungen (23) sich bis zum Drahtteil (15) erstrecken.

2. Interdental-Reiniger nach Anspruch 1, **dadurch gekennzeichnet, dass** die Ausnehmungen (23) zumindest abschnittsweise radial verlaufen.

3. Interdental-Reiniger nach Anspruch 1 oder 2, **dadurch gekennzeichnet, dass** mehrere axial beabstandete Ausnehmungen (23) vorgesehen sind.

4. Interdental-Reiniger nach einem der Ansprüche 1 bis 3, **dadurch gekennzeichnet, dass** in dem Reinigungsteil (20) radial verlaufende Ausnehmungen (24) ausgebildet sind.

5. Interdental-Reiniger nach einem der Ansprüche 1 bis 4, **dadurch gekennzeichnet, dass** das Drahtteil (15) aus Metall oder Kunststoff besteht.

6. Interdental-Reiniger nach einem der Ansprüche 1 bis 5, **dadurch gekennzeichnet, dass** der Träger (11) aus einem eigenstabilen Kunststoff besteht und das Reinigungsteil (20) von einem zumindest abschnittsweisen Überzug (13) des Trägers (11) gebildet ist.

7. Interdental-Reiniger nach einem der Ansprüche 1 bis 6, **dadurch gekennzeichnet, dass** das Drahtteil (15) ein einzelner gerader Draht (21) ist.

8. Interdental-Reiniger nach einem der Ansprüche 1 bis 6, **dadurch gekennzeichnet, dass** das Drahtteil (15) zumindest zwei Drähte (22) aufweist.

9. Interdental-Reiniger nach Anspruch 8, **dadurch gekennzeichnet, dass** die Drähte (22) parallel zueinander verlaufen.

10. Interdental-Reiniger nach Anspruch 8 oder 9, **dadurch gekennzeichnet, dass** die Drähte (22) aus einem zu einer Doppellage gebogenen Draht bestehen.

11. Interdental-Reiniger nach einem der Ansprüche 8 bis 10, **dadurch gekennzeichnet, dass** die Drähte (22) miteinander um ihre Längsachse oder eine dazu parallele Achse verdrillt sind.

12. Interdental-Reiniger nach Anspruch 11, **dadurch gekennzeichnet, dass** an den verdrillten Drähten (22) Borstenbündel (17) und/oder Einzelborsten gehalten sind.

13. Interdental-Reiniger nach Anspruch 12, **dadurch gekennzeichnet, dass** die Borstenbündel (17) und/oder Einzelborsten zwischen den verdrillten Drähten (22) durch Klemmung gehalten sind.

14. Interdental-Reiniger nach Anspruch 12 oder 13, **dadurch gekennzeichnet, dass** die Borstenbündel (17) und/oder Einzelborsten im wesentlichen radial zum Drahtteil (15) verlaufen.

15. Interdental-Reiniger nach einem der Ansprüche 12 bis 14, **dadurch gekennzeichnet, dass** die Borstenbündel (17) und/oder Einzelborsten aus dem Reinigungsteil (20) hervorstehen.

16. Interdental-Reiniger nach Anspruch 15, **dadurch gekennzeichnet, dass** die Borstenbündel (17) und/oder Einzelborsten die Strukturierung (19) des Reinigungsteils (20) in radialer Richtung überragen.

17. Interdental-Reiniger nach einem der Ansprüche 1 bis 16, **dadurch gekennzeichnet, dass** die Strukturierung (19) mehrere radial vom Reinigungsteil (20) hervorstehende Finger (18) aufweist.

## Claims

1. Interdental cleaner with a rod-shaped support (11) which, in an axial end area, has a cleaning part (20) that is made of a flexible plastic and that has a structuring (19) on the outer face, wherein a wire part (15) extending in the longitudinal direction of the support (11) is arranged at least in sections in the support (11), said wire part (15) being embedded in the support (11), **characterized in that** recesses (23) are formed in the support (11) and are filled with the flexible plastic of the cleaning part (20), wherein at least some of the recesses (23) are formed on opposite sides of the support (11), and the recesses (23) extend as far as the wire part (15).

2. Interdental cleaner according to Claim 1, **characterized in that** the recesses (23) extend radially at least in sections.

3. Interdental cleaner according to Claim 1 or 2, **characterized in that** several recesses (23) spaced axially apart are provided.

4. Interdental cleaner according to one of Claims 1 to 3, **characterized in that** radially extending recesses (24) are formed in the cleaning part (20).

5. Interdental cleaner according to one of Claims 1 to 4, **characterized in that** the wire part (15) is made of metal or plastic.

6. Interdental cleaner according to one of Claims 1 to 5, **characterized in that** the support (11) is made of an inherently stable plastic, and the cleaning part (20) is formed by an at least sectional covering (13) of the support (11).

7. Interdental cleaner according to one of Claims 1 to 6, **characterized in that** the wire part (15) is a single straight wire (21).

8. Interdental cleaner according to one of Claims 1 to 6, **characterized in that** the wire part (15) has at least two wires (22).

9. Interdental cleaner according to Claim 8, **characterized in that** the wires (22) extend parallel to each other.

10. Interdental cleaner according to Claim 8 or 9, **characterized in that** the wires (22) are made of a wire that is bent to form a double layer.

11. Interdental cleaner according to one of Claims 8 to 10, **characterized in that** the wires (22) are twisted together about their longitudinal axis or an axis parallel to the latter.

12. Interdental cleaner according to Claim 11, **characterized in that** bristle tufts (17) and/or individual bristles are held on the twisted wires (22).

13. Interdental cleaner according to Claim 12, **characterized in that** the bristle tufts (17) and/or individual bristles are held between the twisted wires (22) by clamping.

14. Interdental cleaner according to Claim 12 or 13, **characterized in that** the bristle tufts (17) and/or individual bristles extend substantially radially with respect to the wire part (15).

15. Interdental cleaner according to one of Claims 12 to 14, **characterized in that** the bristle tufts (17) and/or individual bristles protrude from the cleaning part (20).

16. Interdental cleaner according to Claim 15, **characterized in that** the bristle tufts (17) and/or individual bristles protrude radially over the structuring (19) of the cleaning part (20).

17. Interdental cleaner according to one of Claims 1 to 16, **characterized in that** the structuring (19) has a plurality of fingers (18) protruding radially from the cleaning part (20).

## Revendications

1. Dispositif de nettoyage interdentaire doté d'un support (11) en forme de tige comportant, dans une région d'extrémité axiale, une partie de nettoyage (20) composée d'une matière plastique élastique souple et possédant sur le côté extérieur une structuration (19), une partie de brin (15) s'étendant dans la direction longitudinale du support (11) étant disposée au moins partiellement dans le support (11), ladite partie de brin étant logée dans le support (11), **caractérisé en ce que** des évidements (23) sont réalisés dans le support (11), lesdits évidements étant remplis de la matière plastique élastique souple de la partie de nettoyage (20), au moins quelques-uns des évidements (23) étant réalisés sur les côtés opposés du support (11) et les évidements (23) s'étendant jusqu'à la partie de brin (15).

2. Dispositif de nettoyage interdentaire selon la revendication 1, **caractérisé en ce que** les évidements (23) s'étendent au moins partiellement dans le plan radial.

3. Dispositif de nettoyage interdentaire selon la revendication 1 ou 2, **caractérisé en ce que** plusieurs évidements (23) espacés dans le plan axial sont prévus.

4. Dispositif de nettoyage interdentaire selon l'une quelconque des revendications 1 à 3, **caractérisé en ce que** des évidements (24) s'étendant dans le plan radial sont réalisés dans la partie de nettoyage (20).

5. Dispositif de nettoyage interdentaire selon l'une quelconque des revendications 1 à 4, **caractérisé en ce que** la partie de brin (15) est en métal ou en matière plastique.

6. Dispositif de nettoyage interdentaire selon l'une quelconque des revendications 1 à 5, **caractérisé en ce que** le support (11) se compose d'une matière plastique à stabilité propre et que la partie de nettoyage (20) est formée par un revêtement (13) au moins partiel du support (11).

7. Dispositif de nettoyage interdentaire selon l'une quelconque des revendications 1 à 6, **caractérisé en ce que** la partie de brin (15) est un brin (21) droit individuel.

8. Dispositif de nettoyage interdentaire selon l'une quelconque des revendications 1 à 6, **caractérisé en ce que** la partie de brin (15) comporte au moins deux brins (22).

9. Dispositif de nettoyage interdentaire selon la revendication 8, **caractérisé en ce que** les brins (22) s'étendent parallèlement les uns par rapport aux autres.

10. Dispositif de nettoyage interdentaire selon la revendication 8 ou 9, **caractérisé en ce que** les brins (22) se composent d'un brin incurvé à double épaisseur.

11. Dispositif de nettoyage interdentaire selon l'une quelconque des revendications 8 à 10, **caractérisé en ce que** les brins (22) sont torsadés entre eux autour de leur axe longitudinal ou d'un axe parallèle à lui.

12. Dispositif de nettoyage interdentaire selon la revendication 11, **caractérisé en ce que** des faisceaux de poils (17) et/ou des poils individuels sont maintenus au niveau des brins (22) torsadés.

13. Dispositif de nettoyage interdentaire selon la revendication 12, **caractérisé en ce que** des faisceaux de poils (17) et/ou des poils individuels sont maintenus par serrage entre les brins (22) torsadés.

14. Dispositif de nettoyage interdentaire selon la revendication 12 ou 13, **caractérisé en ce que** les faisceaux de poils (17) et/ou les poils individuels s'étendent pour l'essentiel dans le plan radial par rapport à la partie de brin (15).

15. Dispositif de nettoyage interdentaire selon l'une quelconque des revendications 12 à 14, **caractérisé en ce que** les faisceaux de poils (17) et/ou les poils individuels ressortent de la partie de nettoyage (20).

16. Dispositif de nettoyage interdentaire selon la revendication 15, **caractérisé en ce que** les faisceaux de poils (17) et/ou les poils individuels ressortent, dans la direction radiale, de la structuration (19) de la partie de nettoyage (20).

17. Dispositif de nettoyage interdentaire selon l'une quelconque des revendications 1 à 16, **caractérisé en ce que** la structuration (19) comporte plusieurs doigts (18) saillant dans le plan radial hors de la partie de nettoyage (20).
